# EUROPÄISCHE PATENTSCHRIFT

(11) **EP 1 145 629 B1**
(45) Veröffentlichungstag und Bekanntmachung des Hinweises auf die Patenterteilung: **24.03.2004**
(21) Anmeldenummer: 01101204.4
(22) Anmeldetag: 19.01.2001
(51) Int. Cl.: A01K 7/06

(54) **Viehselbsttränkeinrichtung**
Automatic watering device for cattle
Abreuvoir automatique pour bétail

(30) Priorität: 12.04.2000 DE 20006731 U
(43) Veröffentlichungstag der Anmeldung: 17.10.2001
(73) Patentinhaber: SUEVIA HAIGES GMBH & CO., 74366 Kirchheim a.N./Württ. (DE)
(72) Erfinder: HAIGES Frank, 74366 Kirchheim / Neckar (DE)
(74) Vertreter: Wolff, Michael, Dipl.-Phys.

(56) Entgegenhaltungen:
- DE-U- 8 330 496
- DE-U- 29 509 070
- DE-U- 29 902 138
- US-A- 1 797 963

## Beschreibung

Die Erfindung betrifft eine Viehselbsttränkeinrichtung gemäß Oberbegriff des Anspruches 1.

Bei einer derartigen, aus der DE 2 99 02 138 U1 (Haiges) bekannten Einrichtung, hat die Tränkschale (10) aus rostfreiem Metallblech (Edelstahl) oder Kunststoff einen gebördelten bzw. glatten Rand (10.1), an dessen Außenseite der untere Abschnitt (26) des gusseisernen Befestigungsteiles (12, 26) anliegt und durch Verschrauben befestigt ist. über der Kröpfung (12.2) des Befestigungsteiles (12) mündet der Anschlussstutzen (16) in einen zum Sperrventil (20) führenden Krümmer (14), wobei diese bauliche Einheit aus Stutzen, Krümmer und Ventil mit dem oberen Abschnitt (12.1) des Befestigungsteiles (12, 26) verschraubt ist, welcher Befestigungslöcher aufweist.

An dieser Viehselbsttränkeinrichtung ist nachteilig, dass sie aus vielen Einzelteilen besteht, deren Zusammenbau aufwendig ist, wobei dieser und der Transport der Einrichtung oder ihrer gesamten Einzelteile wegen des hohen Gewichtes des emaillierten Befestigungsteiles beschwerlich ist und der Transport solides Verpackungsmaterial erfordert.
Der Erfindung Liegt daher die Aufgabe zugrunde, eine diesen Nachteil vermeidende Einrichtung der eingangs genannten Art zu schaffen, welche einen geringeren Bestand an Einzelteilen mit einem Leichteren Befestigungsteil und einen einfacheren Aufbau der Einrichtung ermöglicht.
Diese Aufgabe ist erfindungsgemäß durch die kennzeichnende Merkmale des Anspruches 1 gelöst.

Es ist zwar aus der DE 2 95 09 070 U1 (Haiges) schon ein außenliegendes Befestigungsteil (14) aus Blech für eine Tränkschale (10) aus Blech bekannt gewesen, welches ein vertikales ebenes Mittelteil (14.1) und zwei abgewinkelte, die Schale tangierende Seitenteile (14.2 und 14.3) mit Befestigungsbohrungen (20) aufweist und mit einem waagrechten Flansch (16) versehen ist, der über der Schale angeordnet ist und eine Bohrung (18) aufweist, die ein Wasserauslaufventil aufnehmen soll. - Bei diesem "Selbsttränkebecken für Tiere" ist aber, abgesehen vom Fehlen eines konkreten Sperrventiles, nicht klar, wie die Befestigung der Tränkschale an einem vorgesehenen Standrohr im Einzelnen zu erfolgen hat, da die genannte Schrift insoweit schweigt.

Außerdem war es aus der US 1 797 963 (Neller) bekannt, dass die Tränkschale (A) einen radial nach außen vorspringenden, ungefähr waagrechten Rand (G) im Bereich eines Befestigungsteiles (C) hat, wobei dieses und die Schale gegen gegenseitige Verschiebung gesichert sind mittels eines verankerten T-Bolzens (F), der gleichzeitig den Schalenrand untergreift und vertikal durch ein hohles waagrechtes Gussteil (C) als Befestigungsteil gesteckt ist, das einerseits mittels eines seitlichen Flansches (D) lösbar mit einem Standrohr (B) verbunden ist und andererseits die seitlich vertikal angeordnete bauliche Einheit (J, L, M) hält, die neben dem Schalenrand (G) in die Tränkschale (A) eingreift und diese zugleich überragt, wo sie an eine Wasserzuleitung (K) angeschlossen ist. - Der Aufbau der Einheit (J, L, M) aus einem Auslauf-Sperrventil (L), einem Anschlussstutzen (J), der dort auch als Ventilgehäuse dient, und einer Ventilbetätigungsvorrichtung (M) ist auch aus der DE 83 330 496 U1 bekannt gewesen.

Vorteilhafte Ausgestaltungen und Weiterbildungen der erfindungsgemäßen Einrichtung sind in den Ansprüchen 2 bis 10 charakterisiert:

Das Anschmiegen des Befestigungsteiles an die Schalenwand (Anspruch 2) erleichtert die Verbindung beider und verbessert deren Beständigkeit.

Die konische Gestaltung der Schalenwand (Anspruch 3) ermöglicht das Stapeln gleicher Tränkschalen.

Ein Ablassstopfen im Schalenboden (Anspruch 4) erlaubt das Entfernen des Wassers in der Tränkschale ohne deren vorherige Demontage (vgl. DE 2 99 02 138 U1).

Die Bördelung des Schalenrandes (Anspruch 5) vermeidet jegLiche Verletzungsgefahr für das sich selbst tränkende Tier.
Der Schutzbügel (Anspruch 6) dient der Begrenzung der Stabauslenkung und damit der Ventilschonung sowie der einfachen Verbindung von Schalenwand und anliegendem Abschnitt des Befestigungsteiles.

Die Unterbringung aller Einrichtungsteile, ausgenommen der Tränkschale, in derselben (Anspruch 7) gestattet es, sämtliche Einrichtungsteile kompakt zu lagern und zu transportieren, wobei die Schale als Behältnis dient und nur eine geringe Verpackung erforderlich ist, zumal die ganze Einrichtung natürlich auch im Zustand der Demontage wenig wiegt.

Die Befestigungslöcher im oberen Abschnitt des Befestigungsteiles (Anspruch 8) und die dortige Sicke (Anspruch 9) ermöglichen es einfach, dieses mittels einer bemutterten Bügelschraube an einem von der Sicke aufgenommenen vertikalen Standrohr im Stall oder Gelände zu befestigen.
Die Regulier- und Abstellschraube (Anspruch 10) des Sperrventiles erlaubt eine Einstellung und Veränderung bis auf Null des Wasserdurchsatzes, um z. B. das Spritzen beim Einlauf von Wasser in die leere Tränkschale zu vermeiden.

Im Folgenden ist die Erfindung anhand einer durch die Zeichnung beispielhaft dargestellten, bevorzugten Ausführungsform der erfindungsgemäßen Viehselbsttränkeinrichtung im Einzelnen erläutert. Es zeigt perspektivisch:
- Fig. 1: eine Vorderansicht der fertigen Ausführungsform
und
- Fig. 2: die zu ihrem Aufbau erforderlichen Einzelteile, wobei oben in der Mitte Anschlussstutzen, Ventil und Betätigungsstab bereits zu einer baulichen Einheit vereinigt sind

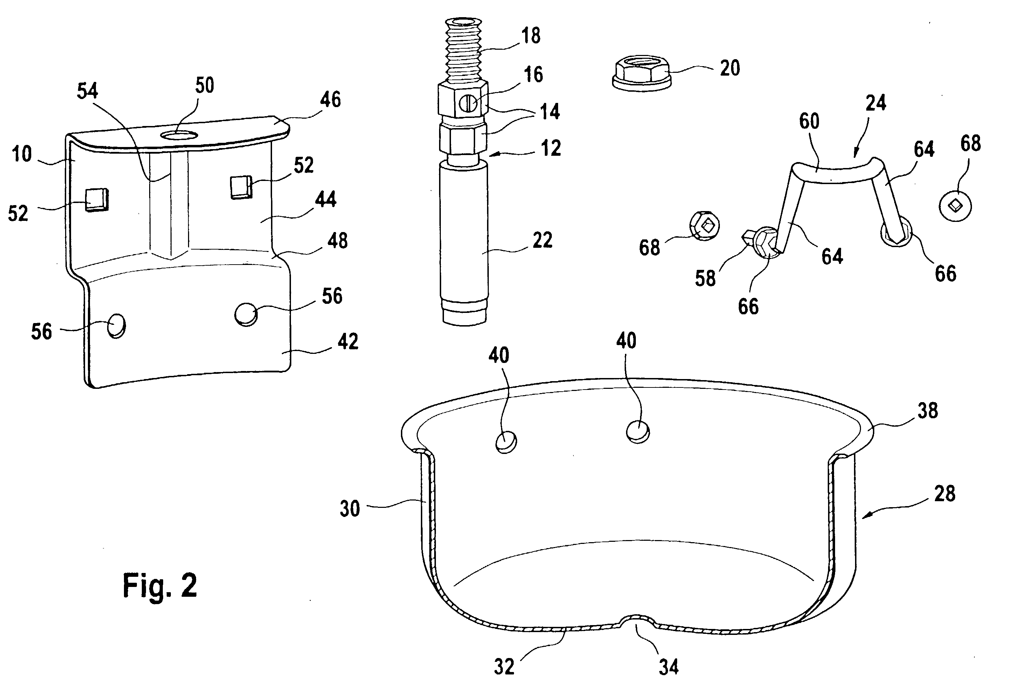

Im Ausführungsbeispiel besteht die Viehselbsttränkeinrichtung nach der Erfindung aus (Fig. 2 oben von links nach rechts betrachtet) einem Befestigungsteil 10 aus umgeformtem Stahlblech, der erwähnten baulichen Einheit 12 aus einem Auslauf-Sperrventil 14 (mittig) mit Regulier- und Abstellschraube 16, einem Wasserzuleitungs-Anschlussstutzen 18 (oben) mit Befestigungsmutter 20 und einem aLs Rohr 22 (unten) ausgebildeten, seitlich auslenkbaren Stab einer Vorrichtung zur Ventilbetätigung; und einem Schutzbügel 24 aus Stahldraht mit zwei Mal zwei Steckscheiben 66 bzw. 68 sowie einer Tränkschale 28 aus tiefgezogenem Stahlblech. - Der Aufbau der Einheit 12 ist im wesentlichen in der DE 8 330 496 U1 dargestellt, was hier nicht wiederholt werden soll.

Die Tränkschale 28 weist eine kreiszylindrische Seitenwand 30, einen ebenen Boden 32 mit Loch 34 und eingesetztem Ablassstopfen (nicht gezeigt) sowie einen rechtwinklig nach außen gebogenen schmalen Rand 38 auf, wobei die übergänge von der Seitenwand 30 einerseits in den Rand 38 bzw. den Boden 32 andererseits viertelkreisförmig profiliert sind. An zwei einander benachbarten Stellen der Seitenwand 30 besitzt diese zwei Bohrungen 40 in gleichem Abstand vom Rand 38. - Das Volumen der Tränkschale 28 ist so groß, dass darin die anderen Einrichtungsteile (in der oberen Reihe von Fig. 2) verschwinden, wenn sie hineingelegt werden.

Das einstückige Befestigungsteil 10 setzt sich aus einem vertikalen unteren Abschnitt 42, einem rechtwinklig abgekröpften vertikalen oberen Abschnitt 44 und einem rechtwinklig abgebogenen Flansch 46 zusammen.

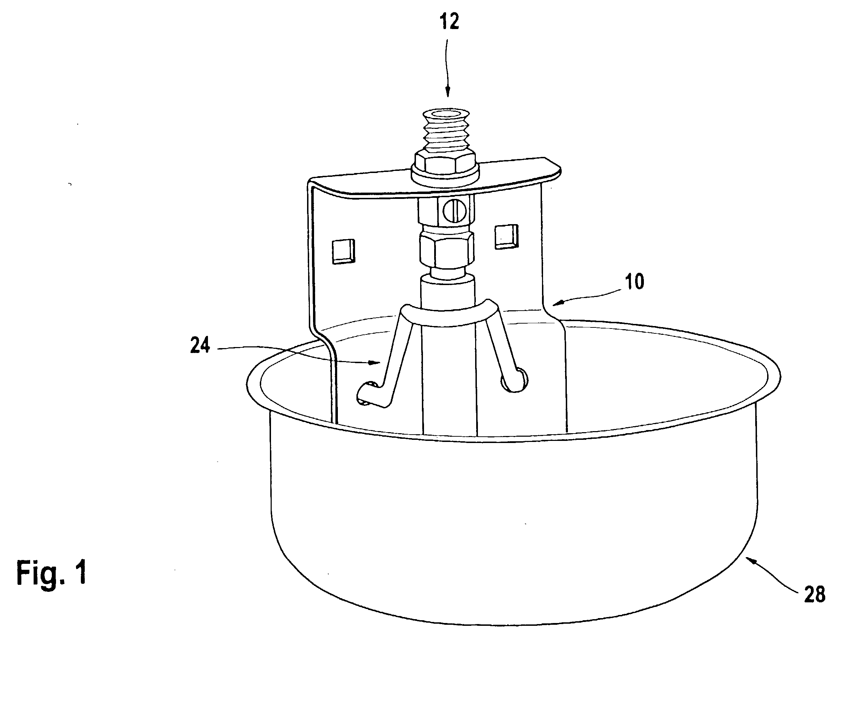

Der untere Abschnitt 42 ist kreiszylindrisch gebogen und schmiegt sich der Seitenwand 30 an, wenn er in die Tränkschale 28 eingesetzt ist, wie es Fig. 1 zeigt. Dabei ruht die radial nach außen gehende Kröpfung 48 des Befestigungsteiles 10 auf einem Ringsektor des Schalenrandes 38, außerhalb dessen der obere Abschnitt 44 des Befestigungsteiles 10 aufragt, dessen Flansch 46 über der Tränkschale 28 liegt und eine mittige Bohrung 50 aufweist, durch welche der von unten durchgesteckte Anschlussstutzen 18 passt. - Die Befestigung der Einheit 12 am Flansch 46 erfolgt durch Anschlag des Ventilgehäuses von unten an die Berandung der Bohrung 50 und durch Festziehen der auf den Stutzen 18 mit Außengewinde geschraubten Mutter 20 gegen diese Bohrungsberandung.

Der obere Abschnitt 44 des Befestigungsteiles 10 besitzt zwei Befestigungslöcher 52 in gleicher Höhe und mittig eine vertikal verlaufende Sicke 54 mit dreieckigem Profil, in das ein Standrohr passt, an dem das Befestigungsteil 10 mittels einer nicht gezeigten bemutterten Bügelschraube festgelegt wird.

Der untere Abschnitt 42 des Befestigungsteiles 10 weist zwei Bohrungen 56 auf, die sich mit den beiden Bohrungen 40 der Schalenwand 30 decken. Durch die zwei Bohrungspaare 40-56 sind zwei waagrechte vierkantige Bolzen 58 des einstückigen Schutzbügels 24 gesteckt, welcher einen waagrechten halben Kreisring 60 aufweist, der das obere Ende des Rohres 10 vorn im Abstand umrundet und mittels zweier nach unten divergierender stehender Stützen 64 mit den beiden Bolzen 58 starr verbunden ist. An den Verbindungsstellen sitzt je eine innere Steckscheibe 66 auf jedem Bolzen 58, welche mit einer dazu passenden äußeren Steckscheibe 68 zusammenwirkt, die von außen an der Berandung einer der beiden Schalenwand-Bohrungen 40 angreift. - Die Bolzen 58 sichern also sowohl die Lage des halben Kreisringes 60 als auch die lösbare Verbindung des Befestigungsteiles 10, nämlich seines unteren Abschnittes 42, mit der Seitenwand 30 der Tränkschale 28.

Zur Vereinfachung der Herstellung können die Teile 58, 64, 66 und 68 entfallen, wobei nur der halbe Kreisring 60 des Schutzbügels 24 verbliebe, dessen Enden in separate Bohrungen des unteren Abschnittes 42 des Befestigungsteiles 10 eingreifen und dort vernietet oder mit den Bohrungsberandungen verschweißt werden können. Ggf. können die Bohrungen 40 und 56 als Langlöcher ausgebildet und mit Schraubverbindungen versehen werden.

## Patentansprüche

1. Viehselbsttränkeinrichtung mit einer Tränkschale (28) aus Blech und einem diese überragenden, eine ungefähr rechtwinklige Kröpfung (48) aufweisenden Befestigungsteil (10) zur lösbaren Verbindung der Tränkschale (28) mit einem Standrohr oder einer Stallwand, sowie einer baulichen Einheit (12) aus einem Auslauf-Sperrventil (14), einem vertikalen Wasserzuleitungs-Anschlussstutzen (18) und einer Ventilbetätigungsvorrichtung, die eineh ungefähr vertikal vom Ventilgehäuse herabhängenden, pendelartig auslenkbaren Stab (22) zum Ventilöffnen aufweist, wobei diese Einheit (12) in lösbarer Schraubverbindung mit dem aufragenden Befestigungsteil (10) steht, **dadurch gekennzeichnet, dass** die Tränkschale (28) einen radial nach außen vorspringenden, ungefähr waagrechten Rand (38) zumindest im Bereich des in die Tränkschale eingreifenden Befestigungsteiles (10) aus umgeformtem Blech oder Kunststoff hat und dessen Kröpfung (48) auf diesem Rand Liegt, wobei Befestigungsteil (10) und Tränkschale (28) gegen gegenseitige Verschiebung gesichert sind; und dass das Befestigungsteil (10) an seinem oberen Ende mit einem einstückig angeformten, ungefähr waagrechten Flansch (46) mit einer Bohrung (50) zur Aufnahme des bemutterten Anschlussstutzens (18) versehen ist, wobei das Gehäuse des Ventiles (14) an der Unterseite des Flansches (46) angeordnet ist, der dazu über der Tränkschale (28) liegt.

2. Einrichtung nach Anspruch 1, deren Tränkschale (28) auch im Bereich des Befestigungsteiles (10) eine kreisrunde Wand (30) aufweist, **dadurch gekennzeichnet, dass** sich der in die Tränkschale (28) eingreifende untere Abschnitt (42) des Befestigungsteiles (10) der Schalenwand (30) anschmiegt.

3. Einrichtung nach Anspruch 2, **dadurch gekennzeichnet, dass** die kreisrunde Wand (30) der Tränkschale (28) konisch gestaltet ist.

4. Einrichtung nach einem der Ansprüche 1 bis 3, **dadurch gekennzeichnet, dass** der flache Boden (32) der Tränkschale (28) mit einem Ablassstopfen versehen ist, der ein Loch (34) im Boden schließt.

5. Einrichtung nach einem der Ansprüche 1 bis 4, **dadurch gekennzeichnet, dass** der Rand (38) der Tränkschale (28) außerhalb des Bereiches, in dem das Befestigungsteil (10) angeordnet ist, nach innen oder außen umgebogen ist.

6. Einrichtung nach einem der Ansprüche 1 bis 5, **gekennzeichnet durch** einen den Stab (22) der Ventilbetätigungsvorrichtung umgebenden Schutzbügel (24), dessen Enden (58) **durch** paarweise vorhandene Löcher (40 und 56) in der Wand (30) der Tränkschale (28) bzw. in dem in diese eingreifenden unteren Abschnitt (42) des Befestigungsteiles (10) gesteckt und an den Lochberandungen festgelegt sind.

7. Einrichtung nach einem der Ansprüche 1 bis 6, **dadurch gekennzeichnet, dass** im Volumen der Tränkschale (28) Platz ist für die gleichzeitige Unterbringung des Befestigungsteiles (10) und der baulichen Einheit (12) sowie eines vorhandenen Schutzbügels (24).

8. Einrichtung nach einem der Ansprüche 1 bis 7, **dadurch gekennzeichnet, dass** der die Tränkschale (28) überragende obere Abschnitt (44) des Befestigungsteiles (10) mit Befestigungslöchern (52) versehen ist.

9. Einrichtung nach Anspruch 8, **dadurch gekennzeichnet, dass** der obere Abschnitt (44) des Befestigungsteiles (10) eine parallel zum Anschlussstutzen (18) verlaufende Sicke (54) mit ungefähr dreieckigem Profil aufweist.

10. Einrichtung nach einem der Ansprüche 1 bis 9, **dadurch gekennzeichnet, dass** das Sperrventil (14) mit einer auf einer seiner beiden Seiten oder von vorn zugänglichen Regulier- und Abstellschraube (16) versehen ist.

## Claims

1. Automatic drinking device for livestock, with a drinking basin (28) consisting of sheet metal and a fastening part (10), which projects above this and which has an approximately right-angle cranked bend (48), for detachable connection of the drinking basin (28) with a standpipe or a stall wall, as well as a constructional unit (12) consisting of an outlet blocking valve (14), a vertical water feed and connecting stub pipe (18) and a valve actuating device, which comprises a rod (22), which depends approximately vertically from the valve housing and which is deflectable in pendulating manner, for opening the valve, wherein this unit (12) is disposed in detachable screw connection with the projecting fastening part (10), **characterised in that** the drinking basin (28) has a radially outwardly projecting, approximately horizontal edge (38) at least in the region of the fastening part (10), which engages in the drinking basin, of shaped sheet metal or plastics material and the cranked bend (48) of which rests on this edge, wherein fastening part (10) and drinking basin (28) are secured against relative displacement, and that the fastening part (10) is provided at the upper end thereof with an integrally formed approximately horizontal flange (46) with a bore (50) for receiving the nut-equipped connecting stub pipe (18), wherein the housing of the valve (14) is arranged at the underside of the flange (46), which for that purpose lies above the drinking basin (28).

2. Device according to claim 1, the drinking basin (28) of which also has a circularly round wall (30) in the region of the fastening part (10), **characterised in that** the lower portion (42), which engages in the drinking basin (28) of the fastening part (10), conforms with the basin wall (30).

3. Device according to claim 2, **characterised in that** the circularly round wall (30) of the drinking basin (28) is formed to be conical.

4. Device according to one of claims 1 to 3, **characterised in that** the flat base (32) of the drinking basin (28) is provided with a drain plug which closes a hole (34) in the base.

5. Device according to one of claims 1 to 4, **characterised in that** the wall (38) of the drinking basin (28) is bent over inwardly or outwardly outside the region in which the fastening part (10) is arranged.

6. Device according to one of claims 1 to 5, **characterised by** a protective bracket (24), which surrounds the rod (22) of the valve actuating device and the ends (58) of which are inserted through holes (40 and 56), which are present in pairs, in the wall (30) of the drinking basin (28) and in the lower portion (42), which engages therein, of the fastening part (10), respectively, and are fixed at the hole rims.

7. Device according to one of claims 1 to 6, **characterised in that** there is space in the volume of the drinking basin (28) for simultaneous accommodation of the fastening part (10) and the constructional unit (12) as well as a protective bracket (24) which is present.

8. Device according to one of claims 1 to 7, **characterised in that** the upper portion (44), which projects above the drinking basin (28), of the fastening part (10) is provided with fastening holes (52).

9. Device according to claim 8, **characterised in that** the upper portion (44) of the fastening part (10) has a corrugation (54), which extends parallel to the connecting stub pipe (18), with an approximately triangular profile.

10. Device according to one of claims 1 to 9, **characterised in that** the blocking valve (14) is provided with a regulating and shutting-off screw (16) on one of its two sides or accessible from the front.

## Revendications

1. Abreuvoir automatique pour bétail, comprenant une cuvette (28) en tôle, un élément de fixation (10) qui dépasse de celle-ci, qui présente une partie (48) coudée approximativement à angle droit et qui est destinée à relier de manière amovible la cuvette (28) à un tuyau vertical ou à une paroi d'étable, et une unité de construction (12) formée d'une vanne d'écoulement (14), d'un raccord vertical de conduite d'amenée d'eau (18) et d'un dispositif d'actionnement de vanne comportant une tige (22) qui pend de l'enveloppe de vanne approximativement à la verticale, qui est apte à décrire un mouvement pendulaire et qui est destinée à ouvrir la vanne, cette unité (12) étant reliée par vissage, de manière amovible, à l'élément de fixation saillant (10),
**caractérisé en ce que** la cuvette d'abreuvoir (28), au moins dans la zone de l'élément de fixation (10) en tôle déformée ou en matière plastique qui pénètre dans ladite cuvette, a un bord (38) approximativement horizontal qui dépasse radialement vers l'extérieur, et la partie coudée (48) de l'élément de fixation (10) est posée sur ce bord, l'élément de fixation (10) et la cuvette (28) étant bloqués à l'encontre d'un déplacement mutuel ; et **en ce que** l'élément de fixation (10) est pourvu, à son extrémité supérieure, d'une patte (46) réalisée d'une seule pièce, approximativement horizontale et présentant un perçage (50) pour recevoir le raccord à écrou (18), l'enveloppe de la vanne (14) étant disposée au niveau du côté inférieur de la patte (46), qui est située à cet effet au-dessus de la cuvette (28).

2. Abreuvoir selon la revendication 1, dont la cuvette (28) présente une paroi ronde (30) même dans la zone de l'élément de fixation (10), **caractérisé en ce que** la section inférieure (42) de l'élément de fixation (10) qui entre dans la cuvette (28) épouse la forme de la paroi de cuvette (30).

3. Abreuvoir selon la revendication 2, **caractérisé en ce que** la paroi ronde (30) de la cuvette (28) a une forme conique.

4. Abreuvoir selon l'une des revendications 1 à 3, **caractérisé en ce que** le fond plat (32) de la cuvette (28) est pourvu d'un bouchon de décharge qui ferme un trou (34) prévu dans le fond.

5. Abreuvoir selon l'une des revendications 1 à 4, **caractérisé en ce que** le bord (38) de la cuvette (28), en dehors de la zone dans laquelle est disposé l'élément de fixation (10), est replié vers l'intérieur ou l'extérieur.

6. Abreuvoir selon l'une des revendications 1 à 5, **caractérisé par** un étrier de protection (24) qui entoure la tige (22) du dispositif d'actionnement de vanne et dont les extrémités (58) sont introduites dans des trous (40 et 56) prévus par paires dans la paroi (30) de la cuvette (28) et dans la section inférieure (42) de l'élément de fixation (10) qui entre dans ladite cuvette, et sont fixées sur le bord des trous.

7. Abreuvoir selon l'une des revendications 1 à 6, **caractérisé en ce que** dans le volume de la cuvette (28), il y a de la place pour loger en même temps l'élément de fixation (10) et l'unité de construction (12) ainsi qu'un étrier de protection prévu (24).

8. Abreuvoir selon l'une des revendications 1 à 7, **caractérisé en ce que** la section supérieure (44) de l'élément de fixation (10) qui dépasse de la cuvette (28) est pourvue de trous de fixation (52).

9. Abreuvoir selon la revendication 8, **caractérisé en ce que** la section supérieure (44) de l'élément de fixation (10) présente une moulure (54) parallèle au raccord (18) et à profil approximativement triangulaire.

10. Abreuvoir selon l'une des revendications 1 à 9, **caractérisé en ce que** la vanne (14) est pourvue d'une vis de réglage et d'arrêt (16) qui est accessible par l'un de ses deux côtés ou par l'avant.
